# EUROPÄISCHE PATENTSCHRIFT

(11) **EP 1 238 866 B1**
(45) Veröffentlichungstag und Bekanntmachung des Hinweises auf die Patenterteilung: **13.04.2005**
(21) Anmeldenummer: 02004303.0
(22) Anmeldetag: 28.02.2002
(51) Int. Cl.: B60R 21/16, B60R 21/20

(54) **Gassack-Modul**
Airbag module
Module de coussin gonflable

(30) Priorität: 01.03.2001 DE 20103581 U
(43) Veröffentlichungstag der Anmeldung: 11.09.2002
(73) Patentinhaber: TRW Automotive Safety Systems GmbH, 63743 Aschaffenburg (DE)
(72) Erfinder: Lorenz, Christian, 63849 Leidersbach 3 (DE); Neupert, Ralph, 63839 Kleinwallstadt (DE)
(74) Vertreter: Kitzhofer, Thomas, Dipl.-Ing.

(56) Entgegenhaltungen:
- DE-A- 19 633 883
- DE-A- 19 749 914
- DE-U- 20 010 726
- DE-U- 20 012 864

## Beschreibung

Die Erfindung betrifft ein Gassack-Modul, mit einem Gassack, der eine Gassackwand mit einem vorderen Wandabschnitt hat, und einer Abdeckung, die einen vorgegebenen ringförmigen Abschnitt, der eine ringförmige Austrittsöffnung für den Gassack schließt, und einen feststehenden Mittelteil aufweist, der vom ringförmigen Abschnitt umgeben ist.

In der DE 197449914 A wird ein Gassack-Modul beschrieben mit einem feststehenden Mitteltel.

Solche Gassack-Module unterscheiden sich von den bislang eingesetzten durch die ringförmige Austrittsöffnung. Der Mittelteil bleibt beim Öffnen der als Kappe ausgebildeten Abdeckung feststehend, wird also nicht nach außen geschwenkt. Ein mit dieser Ausführung verbundener Vorteil besteht darin, daß keine große Klappe an der Abdeckung mehr gebildet ist, die nach außen schwenkt. Der ringförmige Abschnitt besteht üblicherweise aus kleinen, umfangsmäßig aneinandergrenzenden Segmenten, die als Klappen dienen, die aber sehr klein bauen und nach dem Öffnen auch kaum in den Fahrgastinnenraum ragen. Die Gassackmodule mit feststehendem Mittelteil sollen bislang einen ringförmigen Gassack aufweisen, indem der vordere Wandabschnitt des Gassacks, der dem Insassen zugewandt ist, im Bereich seiner Mitte am Austritt aus dem Modul gehindert wird. Die sich dadurch ergebende, mittige Einbuchtung wird durch verschiedenste Maßnahmen kleingehalten oder geschlossen.

Die Erfindung schafft ein Gassackmodul, bei dem keine Einbuchtung im Bereich des vorderen Wandabschnitts mehr vorhanden ist. Die Erfindung schafft dies auf einfache Weise, indem beim erfindungsgemäßen Gassackmodul die Gassackwand eine Ausströmöffnung aufweist, die im gefalteten Zustand so unterhalb des Mittelteils angeordnet ist, daß beim Austritt des Gassacks der Mittelteil über die Ausströmöffnung in das Innere des Gassacks gelangt. Die Ausströmöffnung ist ferner nicht im vorderen Wandabschnitt, d. h. z. B. an einem seitlichen oder rückseitigen Wandabschnitt, gelegen. Der Gassack wird also so gefaltet, daß der Rand der Ausströmöffnung am Mittelteil beim Entfalten vorbeigleitet, dieser sich also relativ zur Gassackwand in das Innere des Gassacks bewegt. Dadurch, daß aber die Ausströmöffnung außerhalb des vorderen Wandabschnitts liegt, also des Abschnitts, auf den der Insasse trifft, ist der vordere Wandabschnitt geschlossen, ohne Öffnung oder Einbuchtung. Die Ausströmöffnung selbst kann dann dazu dienen, den Gassack zu entlüften oder ihm eine andere Härte beim Aufprall des Insassen zu geben. Die Ausströmöffnung hat folglich eine Doppelfunktion.

Vorzugsweise soll die Ausströmöffnung bei aufgeblasenem Gassack auf dessen rückseitigem Wandabschnitt liegen, also dem Insassen abgewandt.

Gemäß der bevorzugten Ausführungsform ist das Gassack-Modul ein Lenkradmodul, denn bei Lenkrädern ist der Abstand des Kopfes des Insassen von der Abdeckung üblicherweise geringer als bei einem Beifahrermodul, so daß der Vorteil der ringförmigen Austrittsöffnung hier besonders zum Tragen kommt.

Der Mittelteil ist vorzugsweise über ein Befestigungsteil, insbesondere ein starres Befestigungsteil, bleibend am Modul arretiert. Das Befestigungsteil ragt im gefalteten Zustand des Gassacks durch die Ausströmöffnung hindurch und kann damit eine Führung für den Rand der Ausströmöffnung beim Austreten aus dem Modul bilden.

Gemäß einer Ausführungsform ist die Abdeckung außenseitig mit einem als separates Teil ausgeführten Emblem versehen, also einem Teil, das bislang mit hohem Aufwand an den großflächigen, nach außen schwenkenden Klappen befestigt werden mußte. Das Emblem ist beim erfindungsgemäßen Gassackmodul Bestandteil des Mittelteils und verbleibt trotz des sich nach außen bewegenden Gassacks an seinem Platz.

Das Emblem kann entweder an einem feststehenden Abschnitt, der einwärts des ringförmigen Abschnitts liegt und vorzugsweise einstückig in diesen übergeht, befestigt sein oder am Befestigungsteil, wobei in letzterem Fall vorzugsweise die Befestigung des Emblems auch die des feststehenden Abschnitts am Befestigungsteil dient, um Teile zu sparen.

Die Abdeckung kann auch aus verschiedenen Einzelteilen gebildet sein, die nicht einstückig miteinander verbunden sein müssen, beispielsweise dem ringförmigen Abschnitt und dem Mittelteil. Der Mittelteil kann beispielsweise auch nur durch das Emblem gebildet sein oder durch das Emblem und einen angrenzenden, feststehenden Abschnitt gebildet sein, der einstückig mit dem ringförmigen Abschnitt verbunden ist und zusammen mit ihm ein Kunststoffabdeckteil bildet. Ferner könnte der Mittelteil auch nur durch den feststehenden Abschnitt gebildet sein. Die Ausführungsform, bei der das Emblem allein den Mittelteil bildet, hat den Vorteil, daß zum Öffnen der Abdeckung geringere Kräfte erforderlich sind, da der Mittelteil und der ringförmige Abschnitt von Hause aus separate Teile sind.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Querschnittsansicht durch eine Ausführungsform des erfindungsgemäßen Gassack-Moduls,
- Figur 2 das Gassackmodul nach Figur 1 bei aufgeblasenem Gassack und
- Figur 3 eine vergrößerte Ansicht einer anderen Ausführungsform im Bereich des ringförmigen Abschnitts und des Mittelteils.

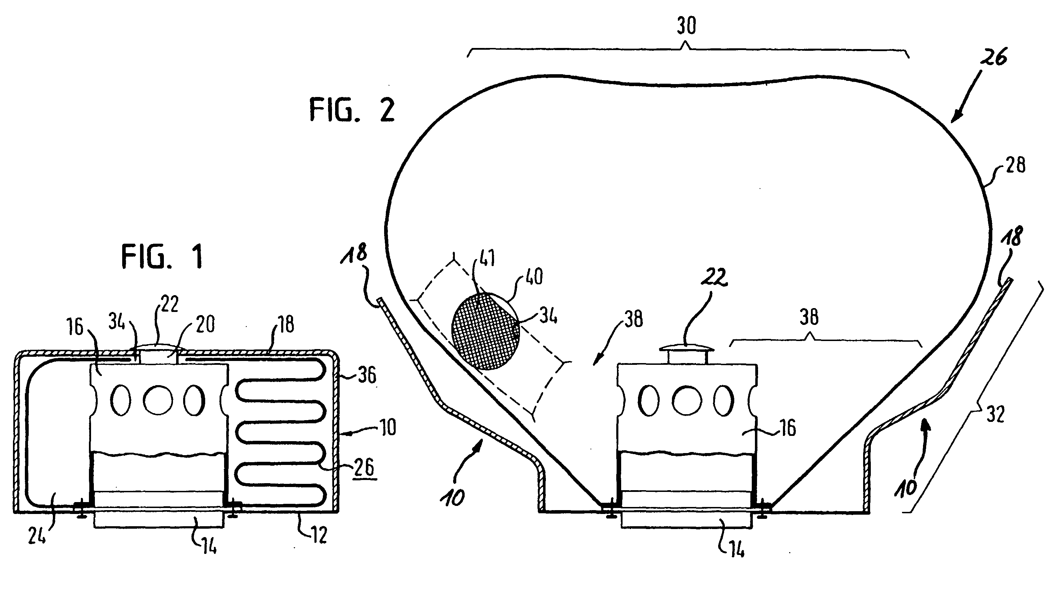

In Figur 1 ist ein Lenkrad-Gassack-Modul gezeigt, das die Form eines im nicht aktivierten Zustand geschlossenen Behälters hat, der durch eine topfförmige Abdeckung 10 und eine Rückwand 12 gebildet ist. Ein Gasgenerator 14 ragt in das Innere des Moduls und ist von einem topfförmigen Diffusor 16 umgeben, der von der Rückwand 12 bis zur gegenüberliegenden Wand der Abdeckung 10 ragt. Die gegenüberliegende Wand hat eine zentrische Öffnung, so daß sie einen ringförmigen Abschnitt 18 der Abdeckung 10 bildet. Durch die zentrische Öffnung erstreckt sich ein an der Stirnwand des Diffusors 16 arretiertes, rohrförmiges Befestigungsteil 20, an dessen äußerem Ende ein Emblem 22 aus Kunststoff und Blech befestigt ist. Da das Emblem 22 die Öffnung im ringförmigen Abschnitt schließt, bildet es einen Teil der Abdeckung 10, wobei der ringförmige Abschnitt 18 und das Emblem 22 durch separate Teile gebildet sind. Das Emblem 22 wird auch als Mittelteil der Abdeckung 10 bezeichnet. Der Rand, der die zentrische Öffnung im ringförmigen Abschnitt 18 bildet, ragt unter das Emblem 22, so daß der ringförmige Abschnitt 18 bei geschlossenem Modul von außen nicht geöffnet werden kann.

Im Inneren des Moduls wird zwischen der Abdeckung 10 und dem Diffusor 16 ein Ringraum 24 definiert, in dem ein gefalteter Gassack 26 untergebracht ist. Der Gassack ist nicht symmetrisch im Ringraum 24 untergebracht, vielmehr ist ein Teil des Ringraums (in Figur 1 der linke Teil) weniger mit dem gefalteten Gassack 26 gefüllt als ein anderer Teil (in Figur 1 der rechte Teil des Ringraums 24).

Der Gassack besteht, mit Bezug auf Figur 2, aus einer Gassackwand 28, die verschiedene Abschnitte hat. Ein vorderer Wandabschnitt 30 ist dem zurückzuhaltenden Insassen zugewandt, und der Insasse trifft auf ihn im Rückhaltefall auf. Darüber hinaus ist ein rückseitiger Wandabschnitt 32 vorgesehen, der dem Insassen abgewandt ist. Der rückseitige Wandabschnitt 32 hat eine Ausströmöffnung 34 für Gas. Im gefalteten Zustand liegt die Ausströmöffnung 34 unterhalb des Mittelteils (Emblems 22). Durch die Lage der Ausströmöffnung 34 am rückseitigen Wandabschnitt 32 kommt die unsymmetrische Unterbringung des Gassacks im Ringraum 24 zustande. Das Befestigungsteil 20 ragt im gefalteten Zustand durch die Ausströmöffnung 34 hindurch.

Beim Aktivieren des Gasgenerators 14 strömt Gas in das Innere des Diffusors 16 und anschließend aus dem Diffusor 16 heraus in den Gassack. Der Gassack drückt auf den ringförmigen Abschnitt 18 und darüber hinaus teilweise auch noch auf die Seitenwand 36 der Abdeckung 10, so daß der ringförmige Abschnitt 18 und die Seitenwand 36 nach außen gedrückt werden und, wie in Figur 2 gezeigt, nach außen schwenken. Damit wird eine ringförmige Austrittsöffnung 38 für den Gassack freigelegt. Der Rand 40 der Ausströmöffnung gleitet am Befestigungsteil 20 und dem Emblem 22 entlang, so daß sich das Emblem 22 schließlich im Inneren des Gassacks 26 befindet.

Die Ausströmöffnung 34 läßt ein Ausblasen von Gas zu, insbesondere wenn der Insasse auf den Gassack 26 prallt, wodurch Druckspitzen abgebaut werden.

Zusätzlich kann ein Verschlußelement in Form eines Gewebebandes 41 vorgesehen und mit seinen kurzen Seiten an der Gassackwand 28 so befestigt sein, daß es im gefalteten Zustand des Gassacks am Befestigungsteil 20 vorbei läuft. Beim Entfalten jedoch schiebt sich das Gewebeband 41 vor die Ausströmöffnung 34, um diese teilweise oder vollständig zu schließen. Trotz großer Embleme 22 und großer Ausströmöffnungen 34 können dadurch geringe effektive Ausströmquerschnitte verwirklicht werden. Das Verschlußelement kann von außen oder innen an der Gassackwand 28 befestigt sein.

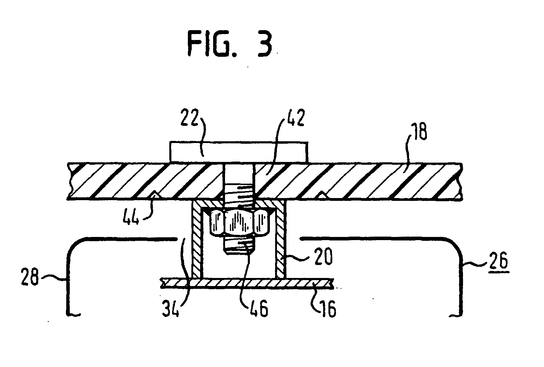

Bei der Ausführungsform nach Figur 3 schließt sich einstückig an den ringförmigen Abschnitt 18 ein feststehender Abschnitt 42 an, welcher unterhalb des Emblems 22 liegt, mit diesem zusammen den Mittelteil bildet und vom ringförmigen Abschnitt 18 über eine vorgegebene, ringförmige Aufreißlinie 44 getrennt ist. Ringförmiger und feststehender Abschnitt 14, 42 bilden ein Kunststoffabdeckteil. Der feststehende Abschnitt 42 ist zwischen dem Emblem 22, das rückseitig einen oder mehrere Schraubbolzen 46 angeformt hat, und dem Befestigungsteil 20 geklemmt. Somit dient die Befestigung des Emblems 22 über die Schraubbolzen 46 auch der Befestigung des feststehenden Abschnitts 42 am Befestigungsteil 20. Alternativ wäre es bei Ausführungsformen ohne separates Emblem 22 möglich, in den feststehenden Abschnitt 42 einen Bolzen einzugießen oder einzuspritzen, der dann rückseitig zur Befestigung des feststehenden Abschnitts 42 am Modul absteht. In dieser Ausführungsform wäre der Mittelteil nur vom feststehenden Abschnitt gebildet.

Anstatt des Befestigungsteils 20 kann der feststehende Abschntit 42 oder das Modul auch unmittelbar am Gasgenerator 14 oder an der Rückwand 12 befestigt sein.

Beim Aufblasen des Gassacks 26 reißt das Kunststoffabdeckteil längs der Aufreißlinie 44. Der ringförmige Abschnitt 18 reißt auch seitlich und klappt nach außen auf. Der feststehende Abschnitt 42 bleibt zwischen Befestigungsteil 20 und Emblem 22 geklemmt und wird an einer Bewegung nach Außen gehindert.

## Patentansprüche

1. Gassack-Modul, mit
einem Gassack (26), der eine Gassackwand (28) mit einem vorderen Wandabschitt (30) hat,
und einer Abdeckung (10), die einen vorgegebenen ringförmigen Abschnitt (18), der eine ringförmige Austrittsöffnung (38) für den Gassack (26) schließt, und einen feststehenden Mittelteil (22; 42) aufweist, der vom ringförmigen Abschnitt (18) umgeben ist,
**dadurch gekennzeichnet, daß**
die Gassackwand (28) eine Ausströmöffnung (34) aufweist, die im gefalteten Zustand so unterhalb des Mittelteils (22; 42) angeordnet ist, daß beim Austritt des Gassacks (26) der Mittelteil (22; 42) über die Ausströmöffnung (34) in das Innere des Gassacks (26) gelangt,
wobei die Ausströmöffnung (34), bezogen auf den aufgeblasenen Zustand des Gassacks, außerhalb des vorderen Wandabschnitts (30) liegt.

2. Gassack-Modul nach Anspruch 1, **dadurch gekennzeichnet, daß** die Ausströmöffnung (34) in dem rückseitigen Wandabschnitt (32) der Gassackwand (28) vorgesehen ist.

3. Gassack-Modul nach Anspruch 1 oder 2, **dadurch gekennzeichnet, daß** es ein Lenkradmodul ist.

4. Gassack-Modul nach einem der vorhergehenden Ansprüche, **dadurch gekennzeichnet, daß** der Mittelteil (22; 42) über ein Befestigungsteil (20) bleibend am Modul arretiert ist und das Befestigungsteil (20) im gefalteten Zustand des Gassacks durch die Ausströmöffnung (34) hindurchragt.

5. Gassack-Modul nach einem der vorhergehenden Ansprüche, **dadurch gekennzeichnet, daß** der Mittelteil (42) durch einen mit dem Ringabschnitt (18) einstückig verbundenen feststehenden Abschnitt (42) und ein als separates Teil ausgeführtes Emblem (22) gebildet ist.

6. Gassack-Modul nach Anspruch 5, **dadurch gekennzeichnet, daß** die Befestigung des Emblems (22) auch der bleibenden Befestigung des feststehenden Abschnitts (42) am Befestigungsteil (20) dient.

7. Gassack-Modul nach einem der Ansprüche 1 bis 4, **dadurch gekennzeichnet, daß** ein als separates Teil ausgebildetes Emblem vorgesehen ist, welches den Mittelteil (22) der Abdeckung bildet.

8. Gassack-Modul nach einem der Ansprüche 4 bis 7, **dadurch gekennzeichnet, daß** das Emblem (22) am Befestigungsteil (20) arretiert ist.

9. Gassack-Modul nach einem der vorhergehenden Ansprüche, **dadurch gekennzeichnet, daß** der Mittelteil (22) und der ringförmige Abschnitt (18) durch separate Teile gebildet sind.

10. Gassack-Modul nach einem der vorhergehenden Ansprüche, **dadurch gekennzeichnet, daß** an der Gassackwand (28) ein Verschlußelement so angebracht ist, daß es sich beim Entfalten des Gassacks (26) über die Ausströmöffnung (34) schiebt und die Ausströmöffnung (34) wenigstens teilweise verschließt.

## Claims

1. A gas bag module, comprising
a gas bag (26) which has a gas bag wall (28) with a front wall section (30),
and a cover (10) which includes a predefined annular section (18) which closes an annular exit opening (38) for the gas bag (26), and a stationary central part (22; 42) which is surrounded by the annular section (18),
**characterized in that**
the gas bag wall (28) has an outflow opening (34) which in the folded state is arranged beneath the central part (22; 42) such that during exit of the gas bag (26), the central part (22; 42) moves via the outflow opening (34) into the interior of the gas bag (26),
the outflow opening (34), as related to the inflated state of the gas bag, being located outside the front wall section (30).

2. The gas bag module according to Claim 1, **characterized in that** the outflow opening (34) is provided in the rear wall section (32) of the gas bag wall (28).

3. The gas bag module according to Claim 1 or 2, **characterized in that** it is a steering wheel module.

4. The gas bag module according to any of the preceding claims, **characterized in that** the central part (22; 42) is arrested permanently on the module by means of a fastening piece (20) and the fastening piece (20), in the folded state of the gas bag, projects through the outflow opening (34).

5. The gas bag module according to any of the preceding claims, **characterized in that** the central part (42) is formed by a stationary section (42) integrally connected with the annular section (18) and by an emblem (22) configured as a separate piece.

6. The gas bag module according to Claim 5, **characterized in that** the fastening of the emblem (22) also serves for the permanent fastening of the stationary section (42) to the fastening piece (20).

7. The gas bag module according to any of Claims 1 to 4, **characterized in that** an emblem designed as a separate piece is provided, which forms the central part (22) of the cover.

8. The gas bag module according to any of Claims 4 to 7, **characterized in that** the emblem (22) is arrested on the fastening piece (20).

9. The gas bag module according to any of the preceding claims, **characterized in that** the central part (22) and the annular section (18) are formed by separate parts.

10. The gas bag module according to any of the preceding claims, **characterized in that** a closure element is fitted to the gas bag wall (28) in such a manner that during deployment of the gas bag (26) it moves over the outflow opening (34) and at least partially closes the outflow opening (34).

## Revendications

1. Module de coussin à gaz, comportant
un coussin à gaz (26) qui possède une paroi de coussin à gaz (28) avec un tronçon de paroi antérieur (30),
et un couvercle (10) qui présente un tronçon (18) annulaire prédéterminé qui ferme un orifice de sortie (38) annulaire pour le coussin à gaz (26), et une partie médiane (22 ; 42) fixe qui est entourée par le tronçon (18) annulaire,
**caractérisé en ce que**
la paroi de coussin à gaz (28) présente un orifice d'écoulement (34) qui, à l'état plié, est agencé au-dessous de la partie médiane (22 ; 24) de telle sorte que lors de la sortie du coussin à gaz (26), la partie médiane (22 ; 24) parvient à l'intérieur du coussin à gaz (26) via l'orifice d'écoulement (34),
l'orifice d'écoulement (34) étant situé, par rapport à l'état de gonflage du coussin à gaz, en dehors du tronçon de paroi antérieur (30).

2. Module de coussin à gaz selon la revendication 1, **caractérisé en ce que** l'orifice d'écoulement (34) est prévu dans le tronçon de paroi postérieur (32) de la paroi de coussin à gaz (28).

3. Module de coussin à gaz selon la revendication 1 ou 2, **caractérisé en ce qu'**il s'agit d'un module de volant de direction.

4. Module de coussin à gaz selon l'une des revendications précédentes, **caractérisé en ce que** la partie médiane (22 ; 42) est arrêtée de façon permanente sur le module au moyen d'une partie de fixation (20) et la partie de fixation (20) fait saillie à travers l'orifice d'écoulement (34), à l'état plié du coussin à gaz.

5. Module de coussin à gaz selon l'une des revendications précédentes, **caractérisé en ce que** la partie médiane (42) est formée par un tronçon (42) fixe relié d'un seul tenant avec le tronçon annulaire (18) et par un emblème (22) réalisé en tant que partie séparée.

6. Module de coussin à gaz selon la revendication 5, **caractérisé en ce que** la fixation de l'emblème (22) sert aussi de fixation permanente du tronçon fixe (42) sur la partie de fixation (20).

7. Module de coussin à gaz selon l'une des revendications 1 à 4, **caractérisé en ce qu'**il est prévu un emblème réalisé en tant que partie séparée qui forme la partie médiane (22) du couvercle.

8. Module de coussin à gaz selon l'une des revendications 4 à 7, **caractérisé en ce que** l'emblème (22) est arrêté sur la partie de fixation (20).

9. Module de coussin à gaz selon l'une des revendications précédentes, **caractérisé en ce que** la partie médiane (22) et le tronçon (18) annulaire sont formés par des parties séparées.

10. Module de coussin à gaz selon l'une des revendications précédentes, **caractérisé en ce que** un élément de fermeture est monté sur la paroi de coussin à gaz (28) de telle sorte que lors du déploiement du coussin à gaz (26), il se glisse sur l'orifice d'écoulement (34) et ferme l'orifice d'écoulement (34) au moins partiellement.
